# EUROPEAN PATENT APPLICATION

(11) **EP 1 844 895 A2**
(43) Date of publication of application: **17.10.2007**
(21) Application number: 07104259.2
(22) Date of filing: 15.03.2007
(51) Int. Cl.: B23K 37/04, B25J 9/00, F01D 5/00

(54) **Braze/weld manipulator and method of manipulating nozzles**

(30) Priority: 17.03.2006 US 377217
(71) Applicant: General Electric Company, Schenectady, NY 12345 (US)
(72) Inventor: SHERLOCK, Graham David, Greenville, SC 29615 (US); KALMAR, Paul Lawrance, Zirconia, NC 28790 (US); REINERTSEN, Roy, Mason, OH 45040 (US)
(74) Representative: Illingworth-Law, William Illingworth

(57) **Abstract**

A manipulator assembly (10) for supporting and manipulating a nozzle segment (16), for example of a gas turbine or a steam turbine. The assembly includes a vertical support member (20) and a horizontal support member (22). The vertical support member is mounted for selective vertical displacement (V) relative to a base (28) and the horizontal support member is operatively coupled at a proximal end thereof to the vertical support member so as to be vertically displaced therewith and so as to be pivotable (B) about a vertical axis (A) of the vertical support member. A nozzle segment fixture (14,114) is operatively coupled to a distal end of the horizontal support member for selectively supporting and manipulating a nozzle segment thereto.

## Description

### BACKGROUND OF THE INVENTION

The present invention relates to turbine repair engineering and, more particularly, to a manipulator for manipulating a nozzle assembly of a turbine during brazing and welding.

Nozzles, which typically weigh up to 200 pounds, cannot be safely manipulated by hand on a work bench. Furthermore, attempts to move a nozzle assembly can result in damage to the parts and injury to the operator.

### BRIEF DESCRIPTION OF THE INVENTION

A manipulator is provided in accordance with an example embodiment of the invention to support a nozzle segment, for example from a gas turbine or from a steam turbine, and allow it to be moved vertically, horizontally and rotated for proper positioning, and then held motionless during welding or brazing.

Thus, the invention may be embodied in a manipulator assembly for supporting and manipulating a nozzle segment, comprising: a manipulator including a vertical support member and a horizontal support member, the vertical support member being mounted for selective vertical displacement relative to a base, the horizontal support member being operatively coupled at a proximal end thereof to said vertical support member so as to be vertically displaced therewith and so as to be pivotable about a vertical axis of said vertical support member; and a nozzle segment fixture, said fixture being operatively coupled to a distal end of said horizontal support member and having coupling components respectively complimentary to first and second radial ends of a nozzle segment to selectively engage the nozzle segment.

The invention may also be embodied in a method of manipulating a nozzle segment during brazing, welding and/or inspection, comprising: providing a manipulator including a vertical support member, a horizontal support member, and a nozzle segment fixture operatively coupled to a distal end of said horizontal support member, the vertical support member being mounted for selective vertical displacement relative to a base, the horizontal support member being operatively coupled at a proximal end thereof to said vertical support member so as to be vertically displaced therewith and so as to be pivotable about a vertical axis of said vertical support member; coupling a nozzle segment at each longitudinal end thereof to said nozzle segment fixture; and selectively at least one (a) a vertically displacing said vertical support member and (b) pivoting said horizontal support member about a vertical axis of said vertical support member so as to selectively, vertically and horizontally displace said nozzle segment fixture with respect to a work surface.

### BRIEF DESCRIPTION OF THE DRAWINGS

These and other objects and advantages of this invention, will be more completely understood and appreciated by careful study of the following more detailed description of the presently preferred exemplary embodiments of the invention, provided by way of example only, taken in conjunction with the accompanying drawings, in which:
FIGURE 1 is a schematic top plan view of a nozzle manipulator assembly supporting a nozzle segment over a bench according to an example embodiment of the invention;
FIGURE 2 is a side elevational view of the manipulator assembly of FIGURE 1;
FIGURE 3 is a front view of a manipulator embodying the invention with the nozzle segment supporting fixture omitted for clarity;
FIGURE 4 is a view taken along line 4-4 of FIGURE 3;
FIGURE 5 is a plan view of a nozzle segment supporting fixture according to an example embodiment of the invention with nozzle specific tooling omitted for clarity;
FIGURE 6 is a rear elevational view of the fixture of FIGURE 5;
FIGURE 7 is a perspective view, from the rear and above, of the fixture of FIGURE 5, with tooling omitted for clarity;
FIGURE 8 is a plan view of another nozzle segment supporting fixture including examples of nozzle specific tooling;
FIGURE 9 is a rear elevational view of the fixture and tooling of FIGURE 8;
FIGURE 10 is a side elevational view of the fixture and tooling of FIGURE 9; and
FIGURE 11 is a view taken along line 11-11 of FIGURE 10.

### DETAILED DESCRIPTION OF THE INVENTION

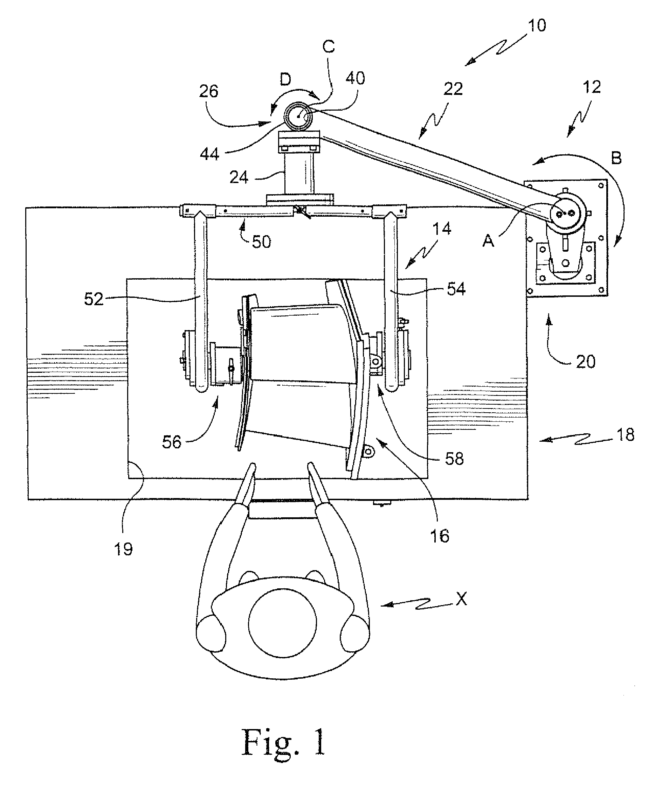

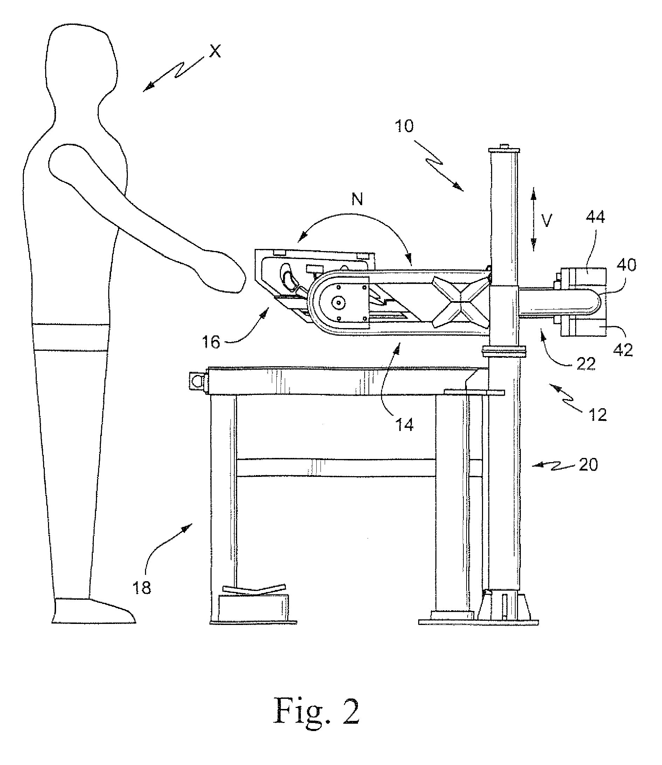

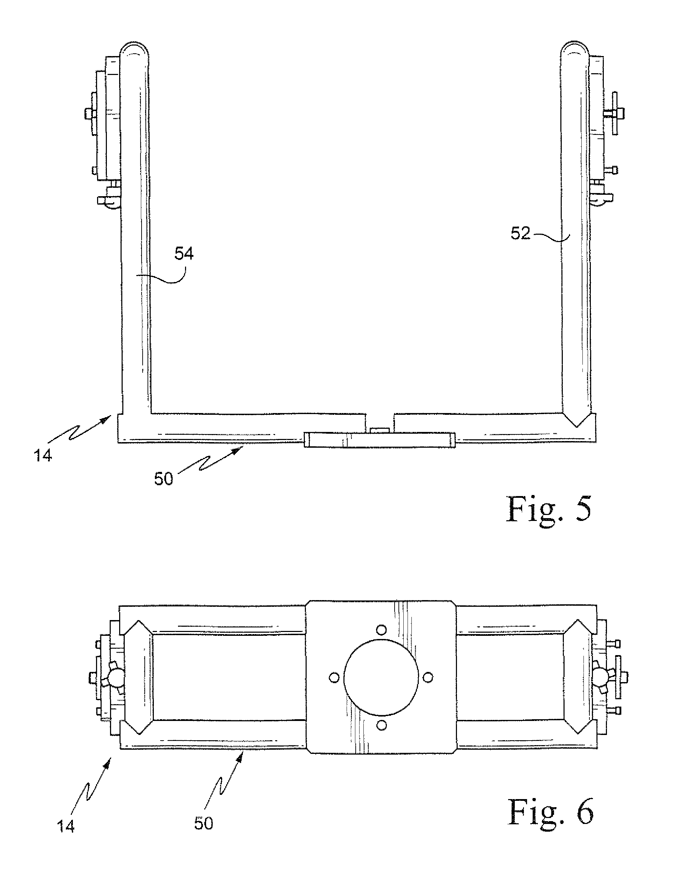

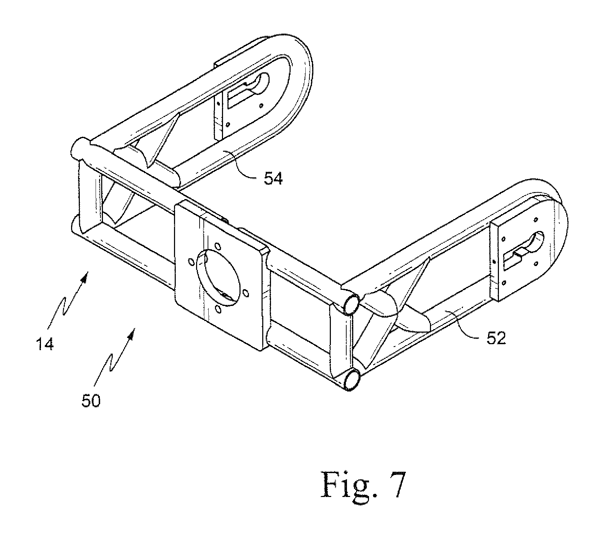

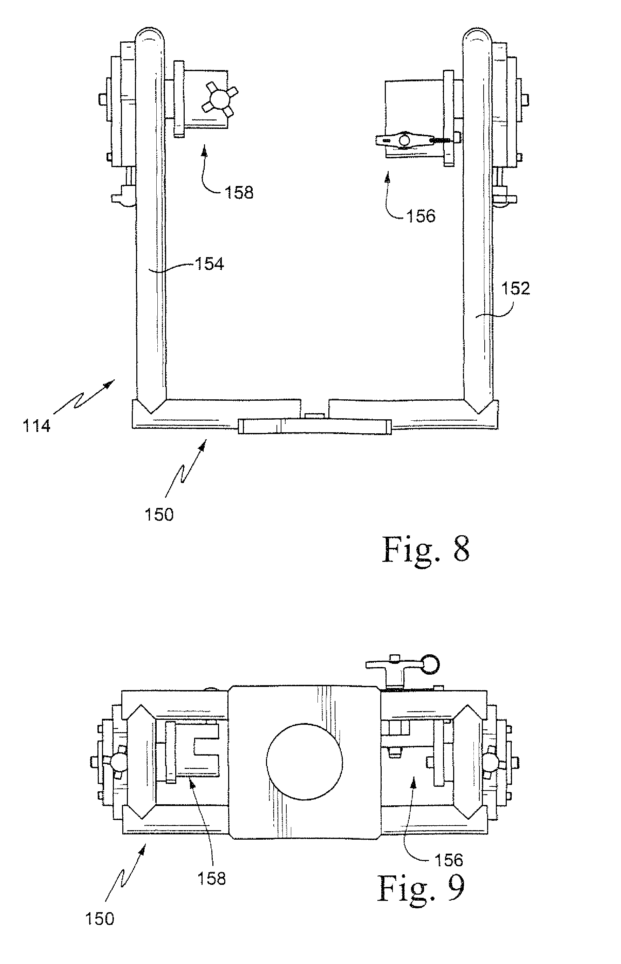

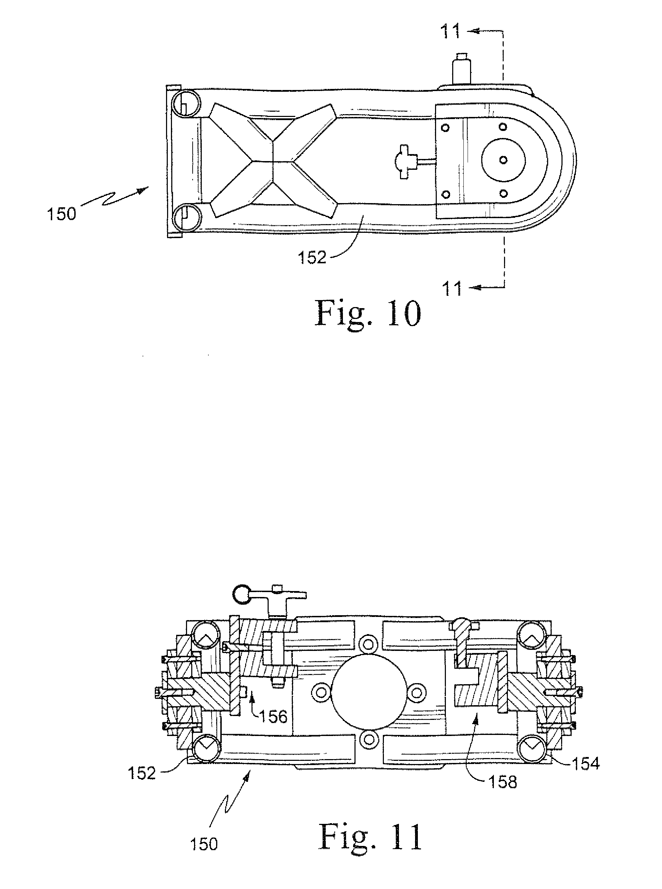

Figures 1-11 show non-limiting examples of a nozzle manipulator assembly and associated components, in accordance with embodiments of the invention. A manipulator assembly 10 for supporting and moving a nozzle segment during welding, brazing or other inspection or repair is schematically illustrated in FIGURES 1 and 2. As illustrated therein, in an example embodiment of the invention, the manipulator assembly includes a manipulator 12 and a nozzle segment supporting fixture 14. The manipulator is disposed to allow a nozzle segment 16 supported in the nozzle fixture 14 to be moved vertically as shown by arrow V and horizontally over, e.g., a bench 18. In the illustrated example embodiment, horizontal movement is accomplished by providing a manipulator 12 including a vertical segment 20 and a horizontal segment 22, the horizontal segment 22 being pivotably mounted (B) with respect to the vertical segment 20. In this embodiment, a nozzle segment fixture mount 24 is in turn pivotally mounted (D) to the distal end 26 of the horizontal segment 22. Thus, simultaneous pivoting movement about axis A and axis C, as shown by arrows B and D, results in movement of the nozzle segment fixture 14 in a horizontal plane, while maintaining the orientation of the nozzle segment 16 with respect to the operator X.

The vertical segment 20 of the manipulator 12 in the illustrated embodiment is comprised of a pillar or post and base assembly 28 and a support tube 30 that is selectively displaced upwardly and downwardly along the post according to actuation of the hydraulic cylinder 32.

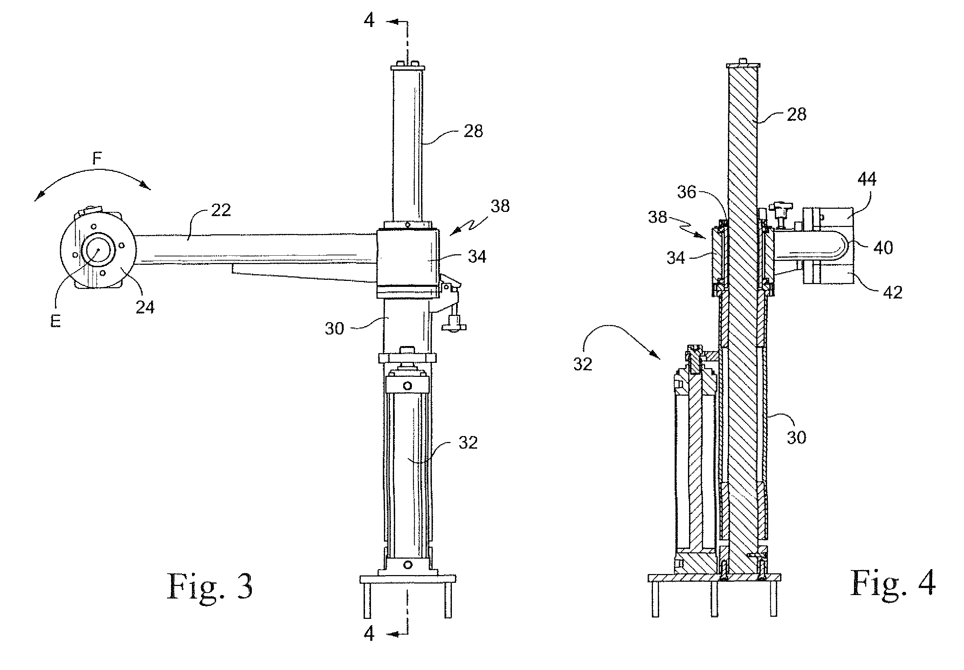

As mentioned above, the horizontal segment 22 is mounted to pivot about axis A of the vertical segment 20. To this end, in the illustrated example embodiment, the horizontal segment 22 includes a generally cylindrical receptacle 34 that is rotatably disposed on a sleeve 36 seated on the support tube 30 so that as the support tube 30 is raised and lowered (V) by the hydraulic cylinder 32, the proximal end 38 of the horizontal segment 22 is likewise raised and lowered. As mentioned above, the fixture mount 24 is mounted to pivot about axis C at the distal end of the horizontal segment. To this end, in the illustrated example embodiment, the distal end 26 of the horizontal segment 22 includes a vertical oriented sleeve 40 to which the mounting assembly of the nozzle segment fixture is pivotally mounted as with the cylindrical bands 42,44 schematically depicted in FIGURE 2 and 4.

In the illustrated example embodiment, movement of the nozzle segment fixture 14 and mount 12 about pivot C and movement of horizontal segment 22 about pivot A is effected manually. Further, in an example embodiment the rotational axes are supported on taper roller bearings with load controls to regulate ease of manual movement. The rotational axes also advantageously have locks (not shown in detail) in order to immobilize each axis independently. It is to be understood, however, that pivoting movement of the horizontal segment 22 and/or of the fixture mount 24 can be automated without departing from this invention. Furthermore, although the horizontal segment 22 is schematically depicted as being of fixed length, those skilled in the art will appreciate that the horizontal arm can be formed from e.g., telescoping tubes to selectively provide for elongation and contraction of the horizontal arm along its axis. Extension of the horizontal arm can be automated by the inclusion of a suitable hydraulic cylinder or other drive mechanism(s) known in the art.

As noted above, the manipulator 12 and fixture 14 are adapted to support and manipulate a nozzle segment 16 weighing, for example, in excess of two hundred pounds. Therefore, in the illustrated example embodiment, the fixture 14 is configured as a rigid support to resist bending loads due to the cantilever support of the nozzle segment with respect to the horizontal segment 22. Furthermore, in an example embodiment of the invention, more than one nozzle segment fixture 14,114 may be provided to be selectively mounted to the manipulator 12 to accommodate nozzle segments of differing sizes/lengths. The nozzle segment fixtures 14,114 in the illustrated embodiments are generally U-shaped having a base 50,150 mounted to the fixture mount 24 and first and second arms 52,54;152,154 extending horizontally therefrom for being secured to respective radial ends of the nozzle segment.

To secure the nozzles respectively to the nozzle fixture, interchangeable tooling or ears 56,58;156,158 that are nozzle specific are provided to be selectively secured to each arm of the fixture. Thus the interchangeable tooling 56,58;156,158 is specific to the nozzle segment configuration, and the fixtures 14,114 are respectively configured for accepting a variety of nozzles of generally similar size/length. The interchangeable tooling is mounted to the fixture arms so that the nozzle segment, once secured to the tooling, can be selectively rotated (N) with respect to the fixture arms. As noted above, with respect to the manipulator structure, advantageously a bearing structure for rotating the nozzle is designed so as to preclude free rotation of the supported part, so that manual intervention is required to effect rotation of the nozzle segment. The nozzle segment may then be locked in a particular orientation so that unintended rotation is precluded. Once again, selective, powered movement, in this case rotation of the nozzle segment, can be accommodated by providing a suitable drive mechanism for selectively rotating the nozzle specific tooling with respect to the fixture arms.

In the illustrated example embodiment, the work bench 18 over which the nozzle segment 16 is suspended by the fixture 14,114 is a downdraft table having an opening or cutout 19, which will generally have a grate (not shown) therein, through which air is sucked downwards to remove e.g. dust particles and solvent fumes during braze application. The invention is not limited to the inclusion of a work bench, or the particulars thereof.

To provide yet a further degree of freedom, the fixture mount 24 may be rotatably disposed with respect to horizontal so as to provide for a selective rotation (F) of the fixture 14,114 about an axis (E) perpendicular to pivot axis C. This allows the nozzle segment to be selectively inclined at an angle to horizontal if deemed necessary or desirable to facilitate welding, brazing or inspection. Rotation F about horizontal axis E also selectively facilitates attachment of the nozzle to the fixture. Once again, manual rotation is proposed, with a locking mechanism to selectively preclude manual rotation, but powered rotation is an alternative.

In one example embodiment of the invention a foot pedal is used to control the hydraulic cylinder 32 for lifting and lowering the horizontal segment 22 of the manipulator 12. In another example, a two button controller is used, e.g. with an up button and a down button that are selectively depressed for corresponding control of the hydraulic cylinder 32.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A manipulator assembly (10) for supporting and manipulating a nozzle segment (16), comprising:
a manipulator including a vertical support member (20) and a horizontal support member (22), the vertical support member being mounted for selective vertical displacement (V) relative to a base (28), the horizontal support member being operatively coupled at a proximal end (38) thereof to said vertical support member so as to be vertically displaced therewith and so as to be pivotable (B) about a vertical axis (A) of said vertical support member; and
a nozzle segment fixture (14,114), said fixture being operatively coupled to a distal end (26) of said horizontal support member and having coupling components (56,58;156,158) respectively complimentary to first and second radial ends of a nozzle segment (16) to selectively engage the nozzle segment.

2. A manipulator assembly as in claim 1, wherein said fixture comprises a base (50,150) and first and second arms (52,54;152,154) projecting therefrom, said coupling components being mounted to said arms.

3. A manipulator assembly as in claim 1, wherein said coupling components are selectively rotatable (N) with respect to said arms of said fixture so that a nozzle segment (16) secured thereto can be rotated with respect to said fixture (14,114).

4. A manipulator assembly as in claim 1, wherein said fixture is operatively coupled to said distal end of said horizontal support member so as to be pivotable with respect thereto.

5. A manipulator assembly as in claim 4, wherein said fixture is pivotable (D) with respect to said horizontal support member about a pivot axis (C) that is substantially parallel to said vertical axis.

6. A manipulator assembly as in claim 1, wherein a fixture mount (24) is interposed between said fixture and said horizontal support member and said fixture mount is pivotable (D) with respect to said horizontal support member about a pivot axis (C) that is substantially parallel to said vertical axis.

7. A manipulator assembly as in claim 6, wherein said fixture mount is fixed at one end to said fixture (14,114) and pivotally coupled at the other end thereof to said horizontal support member (22) and wherein said fixture mount is rotatable between said respective ends so that said fixture can be rotated (F) about an axis (E) generally perpendicular to said pivot axis (C).

8. A method of manipulating a nozzle segment during brazing, welding and/or inspection, comprising:
providing a manipulator (10) including a vertical support member (20), a horizontal support member (22), and a nozzle segment fixture (14,114) operatively coupled to a distal end (26) of said horizontal support member, the vertical support member being mounted for selective vertical displacement (V) relative to a base (28), the horizontal support member (22) being operatively coupled at a proximal end (38) thereof to said vertical support member (20) so as to be vertically displaced therewith and so as to be pivotable (B) about a vertical axis (A) of said vertical support member;
coupling a nozzle segment (16) at each longitudinal end thereof to said nozzle segment fixture (14,114); and
selectively at least one (a) a vertically displacing (V) said vertical support member and (b) pivoting (B) said horizontal support member about a vertical axis of said vertical support member so as to selectively, vertically and horizontally displace said nozzle segment fixture with respect to a work surface.

9. A method as in claim 8, wherein said nozzle segment fixture comprises a base (50,150) and first and second arms (52,54;152,154), and coupling components (56,58;156,158) complementary to said nozzle segment for selectively engaging the nozzle segment, and further comprising selectively rotating (N) said coupling components with respect to said arms of said nozzle segment fixture so that a nozzle segment secured thereto is rotated with respect to said nozzle segment fixture.

10. A method as in claim 8, further comprising selectively pivoting (D) said nozzle segment fixture with respect to a distal end (26) of said horizontal support member.
